# EUROPÄISCHE PATENTSCHRIFT

(11) **EP 2 462 603 B1**
(45) Veröffentlichungstag und Bekanntmachung des Hinweises auf die Patenterteilung: **02.12.2015**
(21) Anmeldenummer: 10732876.7
(22) Anmeldetag: 12.07.2010
(51) Int. Cl.: H01H 13/83

(54) **TASTSCHALTERGRUPPE ALS EINHEITLICHES BEDIENFELD IN KRAFTFAHRZEUGEN**
GROUP OF MOMENTARY-CONTACT SWITCHES AS UNIFORM CONTROL PANEL IN MOTOR VEHICLES
GROUPE DE BOUTONS-POUSSOIRS UTILISÉ COMME PANNEAU DE COMMANDE STANDARD DANS DES VÉHICULES À MOTEUR

(30) Priorität: 05.08.2009 DE 102009036212
(43) Veröffentlichungstag der Anmeldung: 13.06.2012
(73) Patentinhaber: TRW Automotive Electronics & Components GmbH, 78315 Radolfzell (DE)
(72) Erfinder: KORHERR, Joachim, 78359 Orsingen (DE); KOEHNLEIN, Harald, 78244 Gottmadingen (DE)
(74) Vertreter: Prinz & Partner mbB
(86) Internationale Anmeldenummer: PCT/EP2010/004236
(87) Internationale Veröffentlichungsnummer: WO 2011/015271

(56) Entgegenhaltungen:
- DE-A1- 3 407 937
- DE-A1- 19 817 369
- FR-A1- 2 426 322
- US-A- 4 376 879
- US-A1- 2002 101 738

## Beschreibung

Die Erfindung betrifft ein Tastschaltergruppe, die sich besonders zur Verwendung als Bedienfeld in Kraftfahrzeugen eignet.

Allgemein bekannt sind Schaltergruppen, die in einer einheitlichen Blende eingebaut sind. Die Blende hat in festem Raster angeordnete Ausnehmungen, in denen je nach Bedarf eine komplette Schaltereinheit oder aber ein Blinddeckel eingesetzt wird. Eine solche Schaltergruppe geht beispielsweise aus der US 4 376 879 hervor. Diese Lösung ist flexibel, aber nicht optimal, weil die mit einem Blinddeckel verschlossenen Ausnehmungen sowohl sichtbar als auch fühlbar sind. Sie ist auch aufwendig, weil die verwendeten Schaltereinheiten komplett autonom mit allen benötigten Funktionsteilen inklusive Gehäuse ausgeführt sind. Eine weitere Schaltergruppe ist aus der DE 198 17 369 A1 bekannt, bei dieser werden in dem Fall, dass nicht alle vorgesehenen Tastschalter benötigt werden, die entsprechenden Aufnahmeöffnungen leer gelassen und mit einer entsprechend angepassten Deckplatte abgedeckt.

Aufgabe der Erfindung ist es, eine Tastschaltergruppe bereitzustellen, welche flexibel angepasst werden kann und außerdem kostengünstig ist.

Die Aufgabe wird gelöst durch den Gegenstand von Anspruch 1, vorteilhafte Ausführungen ergeben sich aus den abhängigen Ansprüchen.

Durch die Erfindung wird eine Tastschaltergruppe geschaffen, die eine einheitliche Bedienfläche bietet, in der Schalteinheiten von Blindelementen nur durch an den Schalteinheiten vorhandene Symbole unterschieden werden und die Schalteinheiten mit wenigen Funktionsteilen realisiert sind.

Die erfindungsgemäße Tastschaltergruppe hat einen durch eine transparente Folie abgedeckten Rahmen, der Aussparungen aufweist, in denen wahlweise ein Betätigungselement verschiebbar oder ein Blindelement unverschiebbar aufgenommen ist. Die Betätigungselemente sind auf ihrer der Folie zugewandten Fläche mit Symbolen versehen und halten und am gegenüberliegenden Ende eine Leiterplatte. Diese trägt ein Schalterelement, das mit einem Kontaktelement auf einer gegenüberliegenden Grundplatte zusammenwirkt. Die transparente Folie, die den Rahmen mit Betätigungselementen und Blindelementen vollständig abdeckt, bietet eine durchgehende glatte Fläche. Hinter der Folie liegen die Betätigungselemente, die nur durch die selektiv beleuchteten Symbole erkennbar sind. Je nach Schaltzustand kann die Beleuchtung der Symbole unterschiedlich sein, so dass der jeweilige Schaltzustand optisch leicht erkennbar ist. Die Schaltfunktion wird jeweils durch ein Betätigungselement im Zusammenwirken mit dem Schalterelement auf der Leiterplatte und dem Kontaktelement auf der Grundplatte implementiert. Im Vergleich zur Bestückung mit autonomen Schaltereinheiten ist dies eine sehr kostengünstige Lösung.

Weitere Vorteile und Merkmale der Erfindung ergeben sich aus der nachfolgenden Beschreibung unter Bezugnahme auf die beigefügten Zeichnungen. In den Zeichnungen zeigen:
Fig. 1 eine Draufsicht einer Tastschaltergruppe; und
Fig. 2 die Tastschaltergruppe in schematischer Schnittansicht.

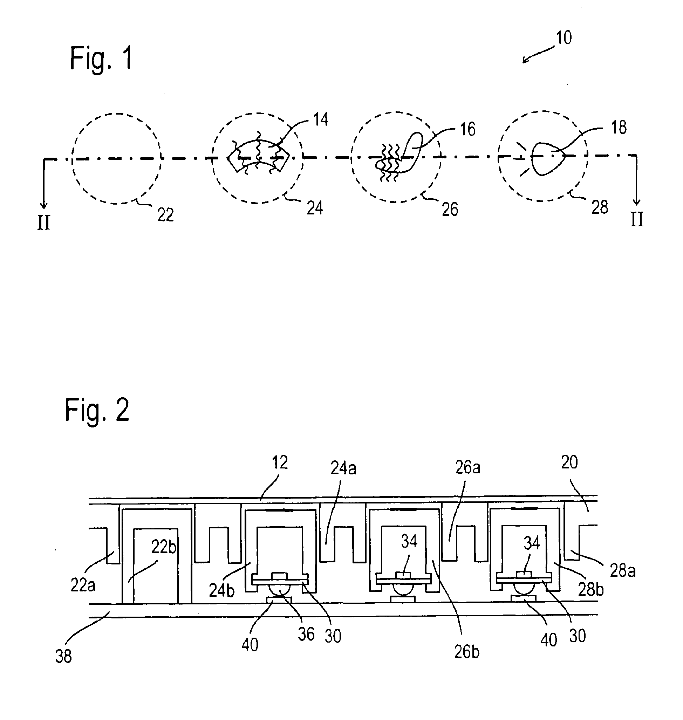

Fig. 1 zeigt ein glattes Bedienfeld 10, das durch eine transparente Folie 12 (Fig. 2) gebildet ist. Durch die Folie hindurch sind drei beispielshalber gezeigte Symbole 14, 16, 18 sichtbar. Gestrichelt sind unter der Folie in einem Rahmen 20 (Fig. 2) gebildete runde Aussparungen 22, 24, 26, 28 angedeutet. Die Aussparung 22 ist nicht mit einer Schaltereinheit bestückt, folglich ist kein Symbol zu sehen.

Der Rahmen 20 ist durch einen Kunststoffträger aus opakem Material gebildet. Er hat die in Fig. 1 angedeuteten runden Aussparungen 22 bis 28, die durch zylindrische Wandungen 22a, 24a, 26a und 28a begrenzt sind. Die Wandungen 24a bis 28a bilden Schiebeführungen für eingesetzte kappenförmige Betätigungselemente 24b, 26b, 28b, während die Wandung 22a ein ebenfalls kappenförmiges Blindelement 22b unverschiebbar aufnimmt.

Die Betätigungselemente 24b, 26b und 28b sind auf ihrer der Folie 12 zugewandten Fläche mit den Symbolen 14, 16 und 18 versehen. Die Symbole können auf die jeweilige Fläche aufgedruckt sein, wenn diese von einem lichtdurchlässigen Material gebildet ist. Alternativ sind die Symbole aus einer opaken Fläche ausgespart.

An dem von der Folie abgewandten Ende trägt jedes Betätigungselement 24b, 26b, 28b eine Leiterplatte 30, die in eine Nut eingeklipst sein kann und auf ihrer dem Symbol gegenüberliegenden Fläche ein Leuchtelement 34 oder mehrere derselben z.B. in Form einer Leuchtdiode (LED) aufweist sowie auf der gegenüberliegenden Fläche mit einem Schalterelement 36 z.B. in Form einer Schnappscheibe versehen ist.

Eine mit dem Rahmen 20 starr verbundene Grundplatte 38 verschließt die Tastschaltergruppe auf der von der Folie abgewandten Rückseite. Die Grundplatte 38 ist mit Kontaktelementen 40 bestückt, die jeweils in Gegenüberlage zu einem der Schalterelemente 36 angeordnet sind und mit diesen zusammenwirken.

## Patentansprüche

1. Tastschaltergruppe mit einem durch eine transparente Folie (12) abgedeckten Rahmen (20), der Aussparungen (22, 24, 26, 28) aufweist, **dadurch gekennzeichnet, dass** wahlweise ein Betätigungselement (24b, 26b, 28b) verschiebbar oder ein Blindelement (22b) unverschiebbar in den Aussparungen (22, 24, 26, 28) aufgenommen ist, wobei die Betätigungselemente (24b, 26b, 28b) auf ihrer der Folie (12) zugewandten Fläche mit Symbolen versehen sind, und am gegenüberliegenden Ende eine Leiterplatte (30) halten, die ein Schalterelement (36) trägt, das mit einem Kontaktelement (40) auf einer gegenüberliegenden Grundplatte (38) zusammenwirkt.

2. Tastschaltergruppe nach Anspruch 1, bei der die Betätigungselemente (24b, 26b, 28b) im Bereich der Symbole lichtdurchlässig sind und auf der Leiterplatte (30) gegenüber den Symbolen selektiv aktivierbare Leuchtelemente (34) angeordnet sind.

3. Tastschaltergruppe nach Anspruch 1 oder 2, bei der die Betätigungselemente (24b, 26b, 28b) kappenförmig ausgebildet sind.

4. Tastschaltergruppe nach einem der vorstehenden Ansprüche, bei der die Schalterelemente (36) durch Schnappscheiben ausgebildet sind.

5. Tastschaltergruppe nach einem der vorstehenden Ansprüche zur Verwendung als einheitliches Bedienfeld (10) in Kraftfahrzeugen.

## Claims

1. A pushbutton switch array comprising a frame (20) which is covered by a transparent film (12) and has recesses (22, 24, 26, 28), **characterized in that** selectively, an actuating element (24b, 26b, 28b) is displaceably accommodated in the recesses (22, 24, 26, 28) or a dummy element (22b) is non-displaceably accommodated therein, the actuating elements (24b, 26b, 28b) being provided with symbols on the surface thereof facing the film (12) and holding a printed circuit board (30) at the opposite end, the printed circuit board (30) carrying a switch element (36) which cooperates with a contact element (40) on an opposite base plate (38).

2. The pushbutton switch array according to claim 1, in which the actuating elements (24b, 26b, 28b) are light-transmissive in the region of the symbols, and light-emitting elements (34) adapted to be selectively activated are arranged on the printed circuit board (30) facing the symbols.

3. The pushbutton switch array according to claim 1 or 2, in which the actuating elements (24b, 26b, 28b) are of a cap-shaped design.

4. The pushbutton switch array according to any of the preceding claims, in which the switch elements (36) are in the form of snap disks.

5. The pushbutton switch array according to any of the preceding claims, for use as a uniform operating panel (10) in a motor vehicle.

## Revendications

1. Groupe de boutons-poussoirs comportant un cadre (20) qui est recouvert d'une feuille transparente (12) et qui présente des évidements (22, 24, 26, 28), **caractérisé en ce qu'**au choix, un élément d'actionnement (24b, 26b, 28b) est reçu de manière déplaçable ou un faux élément (22b) est reçu de manière non-déplaçable dans les évidements (22, 24, 26, 28), les éléments d'actionnement (24b, 26b, 28b) étant pourvus de symboles sur leur face tournée vers la feuille (12) et retenant à l'extrémité opposée une carte de circuit imprimé (30) qui porte un élément de commutateur (36) coopérant avec un élément de contact (40) sur une plaque de base opposée (38).

2. Groupe de boutons-poussoirs selon la revendication 1, dans lequel les éléments d'actionnement (24b, 26b, 28b) sont transparents dans la zone des symboles et des éléments lumineux (34) aptes à être activés de manière sélective sont agencés sur la carte de circuit imprimé (30) en face des symboles.

3. Groupe de boutons-poussoirs selon la revendication 1 ou 2, dans lequel les éléments d'actionnement (24b, 26b, 28b) sont réalisés en forme de capuchon.

4. Groupe de boutons-poussoirs selon l'une des revendications précédentes, dans lequel les éléments de commutateur (36) sont formés par des disques à enclenchement.

5. Groupe de boutons-poussoirs selon l'une des revendications précédentes pour l'utilisation en tant que tableau de commande (10) uniforme dans des véhicules automobiles.
